# EUROPÄISCHE PATENTSCHRIFT

(11) **EP 1 415 488 B1**
(45) Veröffentlichungstag und Bekanntmachung des Hinweises auf die Patenterteilung: **09.11.2005**
(21) Anmeldenummer: 02794537.7
(22) Anmeldetag: 01.08.2002
(51) Int. Cl.: H04Q 7/22, H04M 19/04

(54) **VERFAHREN ZUR ÜBERTRAGUNG VON DATEN**
METHOD FOR THE TRANSMISSION OF DATA
PROCEDE DE TRANSMISSION DE DONNEES

(30) Priorität: 09.08.2001 EP 01119271
(43) Veröffentlichungstag der Anmeldung: 06.05.2004
(73) Patentinhaber: SIEMENS AKTIENGESELLSCHAFT, 80333 München (DE)
(72) Erfinder: LAUMEN, Josef, 31141 Hildesheim (DE); SCHMIDT, Andreas, 38114 Braunschweig (DE); TRAUBERG, Markus, 38159 Velchede (DE)
(86) Internationale Anmeldenummer: PCT/EP2002/008598
(87) Internationale Veröffentlichungsnummer: WO 2003/015429

(56) Entgegenhaltungen:
- WO-A-99/25107
- US-A- 6 070 053

## Beschreibung

Die vorliegende Erfindung betrifft ein Verfahren zur Übertragung von Daten nach dem Oberbegriff von Anspruch 1, ein Teilnehmer-Endgerät, und ein Kommunikationssystem. Dabei wird unter dem Begriff der Daten im Rahmen der vorliegenden Erfindung auch jede Art von Information verstanden, die aus einzelnen Bestandteilen zusammengesetzt ist. Diese einzelnen Bestandteile oder Elementen können dabei nach unterschiedlichen Standards aufgebaut, organisiert und/oder codiert sein. Demnach können in diesem Sinne Daten auch eine multimediale Nachricht darstellen, die diverse Elemente verschiedener Standards umfasst.

Verfahren und Vorrichtungen zur Übertragung verschiedener Formen oder Formate von Daten sind bekannt. Ein Mobilfunksystem nach dem Global System for Mobile Communications Standard, kurz GSM, bietet beispielsweise neben der Sprachtelephonie auch die Möglichkeit, Information in Form kurzer Textnachrichten von bis zu 160 Zeichen Länge zu versenden bzw. zu empfangen. Dieser Dienst wird als Short Message Service bezeichnet, kurz SMS.

Gemäß der Wo 99/25107 wird lediglich beim Verbindungsaufbau, d.h. "Set-UP", zwischen einem sendenden Mobilfunkgerät und einem empfangenden Mobilfunkgerät im Fall von UUS (user to user signalling) ein Feld der "Set-UP"-Nachricht zur zusätzlichen Mitübertragung einer persönlichen Melodie, eines graphischen Symbols oder einer Authentifizierung des Absenders an den Empfänger bereitgestellt. Dadurch kann z.B. die persönliche Melodie des Absenders anstelle der vorgegebenen Melodie des Empfängers auf dessen Mobilfunkgerät beim "Set-UP", d.h. Verbindungsaufbau, abgespielt werden.

Die US 6,070,053 sieht alternativ zur Ausnutzung des freien Feldes im "Set-UP"-Signal der WO 99/25107 vor, im Anrufsignal Musikdaten eines Anrufers zusätzlich anzuhängen und diesen Anhang mit an das Funkkommunikationsgerät eines Anrufempfängers zu übertragen. Erkennt das empfangende Funkkommunikationsgerät die angehängten Musikdaten, so legt es diese in einem Speicher zum Abspielen ab.

Für das Mobilfunksystem der nächsten Generation, das Universal Mobile Telecommunication System UMTS, wird zur Zeit eine multimediafähige Variante eines mobilen Nachrichtendienstes standardisiert, der so genannte Multimedia Messaging Service MMS, siehe 3GPP TS 23.140 version 4.3.0, Release 4, Juni 2001, 3^{rd} Generation Partnership Project, Technical Specification Group Terminals, Multimedia Messaging Service (MMS), Functional Description, Stage 2 und 3GPP TS 22.140 v.4.1.0 (Juni 2001), 3^{rd} Generation Partnership Project, Technical Specification Group Services and System Aspects, Service Aspects, Stage 1, Multimedia Messaging Service.

Informationen als Nachrichten mit multimedialen Inhalten werden im Folgenden zur besseren Abgrenzung von den Textnachrichten des SMS nur noch als Multimedia Message bezeichnet, kurz MM. Im Gegensatz zu dem SMS entfällt bei dem Multimedia Message Service MMS die Beschränkung auf reine Textinhalte. In einem MMS wird es auch möglich sein, Texte dem individuellen Geschmack entsprechend zu formatieren, sowie beliebige Inhalte in eine Nachricht einzubetten. Dazu zählen z.B. Audio- und Videoinhalte, Standbilder, Grafiken, Texte, u.a.. Die nachfolgend offenbarte Lehre bezieht sich generell auf Datenmengen, die aus einzelnen Elementen von Text- und/oder Bilddaten mit oder ohne Ton zusammengesetzt und jeweils nach gleichen oder unterschiedlichen Standards codiert sind, auch wenn in Anwendungen nach dem vorstehend genannten Standard ein wesentliches Einsatzfeld für die vorliegende Erfindung zu sehen ist.

Nach dem bisherigen Stand der Technik ist eine Implementierung von MMS lediglich über das Wireless Application Protocol WAP realisierbar. Zur Überbrückung der Luftschnittstelle zwischen einem MMS-tauglichen Endgerät und dem WAP Gateway ist die Benutzung des WAP Wireless Session Protocol WSP vorgesehen, siehe WAP-209-MMS Encapsulation, Wireless Application Protocol; WAP Multimedia Messaging Service; Message Encapsulation; MMS Proposed version Jnue 2001 und 3GPP TS 23.140 version 4.3.0, Release 4; Third Generation Partnership Project; Technical Specification Group Terminals; Multimedia Messaging Service (MMS); Functional Description; Stage 2.

Eine MM besteht grundsätzlich aus einem Kopfteil und einem Datenteil. Der Kopfteil setzt sich aus definierten Kopf-Feldern zusammen und enthält allgemeine Informationen zur MM. Der Datenteil einer MM kann ein oder mehrere Elemente unterschiedlicher Datentypen und Datenformate in beliebiger Reihenfolge enthalten. Wie bereits aus dem EDV-Bereich bekannt sind die eigentlichen multimedialen Inhalte relativ groß, so dass sie Speicherplatz in wesentlichem Umfang belegen und im Fall einer Übertragung auch entweder hohe Leitungskapazitäten oder aber lange Übertragungszeiten in Anspruch nehmen.

Ein aus dem vorstehend beschriebenen Eigenschaften abgeleitetes weiteres Merkmal des MMS ist, dass bei der Zustellung von MMs zwischen dem sogenannten PUSH-Modus, bei dem eine ankommende MM unverzüglich dem Empfänger zugestellt wird, und dem sogenannten PULL-Modus, bei dem der Empfänger zunächst über eine neu eingetroffene MM durch eine Benachrichtigung lediglich informiert wird, unterschieden wird. Der Empfänger kann im PULL-Modus auf die Benachrichtigung hin selbst entscheiden, ob bzw. wann er diese MM auf sein Endgerät herunterlädt. Mit anderen Worten kann der Empfänger im PULL-Modus die MM auch zu einem Zeitpunkt mit preiswertem Tarif herunterladen. Im Fall mehrerer bereitliegender MMs kann der Empfänger darüber hinaus eine Reihenfolge nach einer jeweiligen Wichtigkeit festlegen, ohne dass er sich für den Empfang noch wichtigerer Informationen selber blockiert.

In beiden Modi ist es jedoch notwendig, dass der Empfänger von der Zustellung einer MM, PUSH-Modus, oder dem Eingang einer Benachrichtigung, PULL-Modus, selber Kenntnis nehmen kann. In modernen Telefonen sind heutzutage zur Kenntlichmachung eines Anrufes eine Vielzahl von Klingeltönen gespeichert, aus denen der Benutzer einen oder auch mehrere für eingehende Anrufe oder SMS-Textnachrichten auswählen kann. Gegebenenfalls unterstützt das Endgerät sogar das Zusammenfassen von Anrufern zu Anrufergruppen. In diesem Fall kann mehreren unterschiedlichen Anrufern ein gemeinsamer Klingelton zugeordnet werden, der sich von dem Klingelton für alle übrigen Anrufe oder andere Dienste, wie z.B. SMS-Textnachrichten, unterscheidet. Allen heute benutzten Signalisierungssignalen ist jedoch gemein, dass sie im Endgerät des Empfängers gespeichert sind. Somit bestimmt auch nur der Empfänger über deren Zuordnung und/oder Benutzung, ein Anrufer bzw. Absender hat darauf keinen Einfluss.

Der vorliegenden Erfindung liegt die Aufgabe zugrunde, ein Verfahren, ein Teilnehmer-Endgerät, und ein Kommunikationssystem vorzuschlagen, das einem Absender eine Möglichkeit gibt, auf ein Signalisierungssignal in einem Endgerät eines Empfängers im Fall der Übertragung einer MM Einfluß zu nehmen und insbesondere mit großer Freiheit ein Signalisierungssignal individuell bei einer Wahl eines oder mehrerer innerhalb eines MM-Standards versendbaren Datenformate zu gestalten.

Diese Aufgabe wird erfindungsgemäß durch ein Verfahren mit den Merkmalen des Anspruchs 1 und ein Teilnehmer-Endgerät mit den Merkmalen des Anspruchs 30 gelöst. Ferner ist ein Kommunikationssystem nach Anspruch 32 Lösung dieser Aufgabe. Die Unteransprüche definieren jeweils bevorzugte und vorteilhafte Ausführungsformen der vorliegenden Erfindung.

Ein erfindungsgemäßes Verfahren zur Übertragung von Multimedia-Nachrichten in einem Kommunikationssystem, d.h. insbesondere Daten zur Übertragung von Text- und/oder Bilddaten mit oder ohne Ton, wobei eine zu übermittelnden Datenmenge aus einzelnen Elementen bzw. multimedialen Bestandteilen zusammengesetzt wird, die jeweils nach gleichen oder unterschiedlichen Standards codiert werden, zeichnet sich demnach dadurch aus, dass eine Kennzeichnung eines Elementes vorgenommen wird, um eine unmittelbare Darstellung dieses Elementes vor oder beim Eintreffen der Daten und/oder einer vorgegebenen Teilmenge der Daten zu veranlassen. Damit wird mindestens ein vorbestimmtes Element eines beliebigen Standards aus einer zu übersendenden Datenmenge als Signalisierungssignal in vorteilhafter Weise automatisch geöffnet, so dass der Empfänger im Gegensatz z.B. zu einem eingehenden Telefonanruf nicht länger ein voreingestelltes Signal zu hören bekommt. Das sofort geöffnete Element kann nach Auswahl durch einen Absender also z.B. einen beliebigen Audioinhalt nutzen, um den Empfänger in individueller Weise auf eine neu eingegangene multimediale Nachricht aufmerksam zu machen. Vorteilhafterweise ist ein erfindungsgemäßes Verfahren im PUSH- wie auch im PULL-Modus anwendbar.

In einer Weiterbildung der Erfindung werden die Daten zum Versand derart aufbereitet, daß sie einen Header bzw. Kopfteil zum Transport von Organisationsinformationen und einen Body bzw. Körper zum Transport einer jeweiligen Nutzinformation umfassen. Die Nutzinformation umfaßt dabei vorzugsweise Elemente in Form mehrerer Datenpakete. Dabei wird ein erfindungsgemäßes Verfahren vorzugsweise für Daten eingesetzt, die als Multimedia Message MM in einem Multimedia Message Service MMS übertragen werden, insbesondere auf ein mobiles Teilnehmer-Endgerät oder speziell ein WAP-fähiges Mobiltelefon als s.g. MMS User Agent.

Auch im MMS fehlt aktuell die Möglichkeit, dem empfangenden User Agent Informationen über eine Signalisierung beim Eintreffen einer MM bei einem Empfänger durch einen Versender zu beschreiben. Erfindungsgemäß wird hier nun die Möglichkeit geschaffen, auf ein in der MM enthaltenes Element zu verweisen, um damit ein Signalisierungssignal zu einer MM für einen Empfänger durch einen Sender genau zu spezifizieren. Neben der Darstellung eines Textes ist somit auch jede Form der multimedialen Präsentation, z.B. eine Audiosequenz, ein Standbild oder auch eine Videosequenz als sofort zum Start ablaufende Einführung definierbar.

In einer bevorzugten Ausführungsform der Erfindung umfaßt ein Signalisierungssignal optische, akustische und/oder taktile Elemente. Zur Senkung einer zu übermittelnden Datenmenge werden bei der Bestimmung, Beschreibung oder Auslegung eines Signalisierungssignals vorzugsweise Rückgriffe auf Elemente gemacht, die entweder beim Empfangsgerät fest vorinstalliert oder durch eine vorhergehende Übertragung bereits vorhanden bzw. gespeichert sind. Variationen derartiger Elemente können dann durch Aufruf eines jeweiligen Elementes z.B. durch einen Namensbefehl für ein bestimmtes Element und Übermittlung eines Anderungsvektors oder von Änderungs- und Abwandlungswerten realisiert werden. Damit wird eine zur Übermittlung eines individuellen Signalisierungssignals erforderliche Datenmenge sehr stark gesenkt, wobei weiterhin diverse Elemente in beliebiger Form miteinander kombiniert werden können.

Vorzugsweise wird im Rahmen der vorliegenden Erfindung konform mit einem Standard eine Möglichkeit geschaffen, in einer MM des Multimedia Messaging Service MMS mindestens ein Objekt des Datenteils als Signalisierungssignal bei einem Empfangsgerät bzw. einem empfangenden User Agent mit dem Ziel zu kennzeichnen, daß dieses Signal den Empfänger mit bzw. bei Eingang durch den empfangenden User Agent unmittelbar informiert. Hierzu wird in einer Weiterbildung der Erfindung eine Codierung der entsprechenden Information in der MM vorgeschlagen. Es existieren im wesentlichen zwei prinzipiell unterschiedliche Möglichkeiten, mindestens einen bestimmten multimedialen Bestandteil einer MM zu identifizieren bzw. zu referenzieren:
1. Jedem multimedialen Bestandteil einer MM wird eine eigene Identifikationsnummer zugeordnet, damit die einzelnen Bestandteil einer MM einzeln angesprochen werden können. Zu diesem Zweck wird für jedes MM-Element ein zusätzliches Kopf-Feld mit der Bezeichnung X-Mms-Content-ID eingeführt, das die Identifikationsnummer des entsprechenden MM-Elementes beinhalten soll.
   Verfahren zum Aufbau z.B. einer Content-ID oder einer eindeutig zugeordneten Beschreibung sind vom Anmelder in der europäischen Patentanmeldung mit der Anmeldenummer EP 01 101 057.6 offenbart worden.
2. Ein Kopf-Feld darf auch eine Auflistung von mehreren Parametern enthalten, siehe u.a. WAP-203-WSP, Version 4-May-2000; Wireless Application Protocol, Wireless Session Protocol Specification; Chapter 8.4: "Header Encoding". So wird beispielsweise das Kopf-Feld X-Mms-Content-ID eines MM-Elementes um einen Satz von Parametern, wie z.B. Identifikationsnummer, Name, Elementgröße, etc., erweitert, um damit jedes MM-Element genau beschreiben zu können.
   Diese Vorgehensweise ist vom Anmelder in den europäischen Patentanmeldungen mit den Anmeldenummern EP 01 101 057.6 offenbart und in der EP 01 107 278.2 weiterentwickelt worden.

Je nachdem wie die einzelnen multimedialen Bestandteile einer MM nach einer der beiden vorstehend genannten Arten identifiziert werden, gibt es auch unterschiedliche Möglichkeiten ein Element einer MM erfindungsgemäß als Signalisierungssignal zu kennzeichnen:
a) Erfolgt die Identifizierung eines MM-Elementes nach der erstgenannten Möglichkeit, so bietet es sich an, ein neues Kopf-Feld mit der möglichen Bezeichnung X-Mms-Signaling-Element in den Kopfteil einer MM zu integrieren, in das eine Identifikationsnummer desjenigen MM-Elementes oder mehrerer Elemente geschrieben werden kann, das als Signalisierungssignal dienen soll.
b) Erfolgt die Identifizierung eines MM-Elementes nach der zweiten Möglichkeit, so bietet es sich an, innerhalb des oben vorgeschlagenen Kopf-Feldes mit der Bezeichnung X-Mms-Content-ID, in dem mehrere Parameter für ein Element aufgelistet werden können, auch gleich einen Parameter bereitzustellen, mit dem ein MM-Element als Signalisierungssignal gekennzeichnet werden kann. Dieser Paramter könnte zum Beispiel Signaling-Element heißen.

Die Codierung eines Kopf-Feldes kann vorteilhaft als Codierung des Feld-Namens und/oder des Feld-Wertes durchgeführt werden. Für konkrete Formen einer zu angewandten Standards passenden Umsetzung wird auf die Ausführungsbeispiele verwiesen, in denen die jeweiligen Vorteile der beiden vorstehend genannten Möglichkeiten im Detail dargestellt werden.

Die Kennzeichnung nach einem oder mehreren der vorstehenden Merkmale wird in einer Ausführungsform der Erfindung in den Daten der MM codiert. Hiervon sind nach dem WAP-Standard insbesondere die Meldungen M-Send.req, M-Notification.ind und/oder M-Retrieve.conf betroffen. Eine Codierung des neuen Kopf-Feldes kann dabei in Kombination mit einer Möglichkeit zur Identifikation der MM-Elemente erfolgen, wie z.B. in [3] definiert. Alternativ kann ein Parametersatz in dem Kopf-Feld der genannten WAP-Messages erweitert werden.

Nach dem WAP Standard erfolgt die Codierung vorzugsweise in der Meldung M-Send.req. Die Codierung erfolgt damit zentral beim Sender bzw. der Sender-Applikation, so daß nachfolgend in einer unter Bezugnahme auf eine Abbildung der Zeichnung noch beschriebene Übertragungskette keine Modifikation der Daten mehr vorgenommen werden muß. Eine Extraktion und/oder Aufbereitung des Signalisierungssignals insbesondere als eigenständiges Signal im Pull-Modus kann von einem sender- oder empfangsseitigen MMS-Relay/Server und/oder einem empfangenden MMS User Agent aus einer MM vorgenommen werden. Dabei ist diesen beiden Codierungsverfahren gemeinsam, daß eine Aufgabenverlagerung von dem Sender in das Kommunikationssystem vorgenommen wird. Es wird mithin Intelligenz in ein Netzwerk eingebracht, wodurch schneller gearbeitet werden kann, und zudem können auch ohne Nachrüstung beim Sender neue Verfahren oder Teilverfahren eingesetzt werden, da ein Austausch eines alten gegen ein neues Verfahren nun zentral vorgenommen wird. Nicht zuletzt ist wichtig, daß durch die Entlastung des Empfängers auch dessen Ressourcen geschont werden. Davon sind insbesondere die Batterien bzw. Akkus betroffen, die durch diese Maßnahme weniger Energie zur Verarbeitung aufbringen müssen. Zudem können beim Datenversand auch noch zusätzlich Kompressionsverfahren zur Beschleunigung und weiteren Entlastung der Energieversorgung eingesetzt werden.

So kann einem eingehenden Anruf vorteilhafterweise zunächst eine MM mit einem multimedialen Signalisierungssignal vorangestellt werden, um einen eingehenden Anruf und/oder eingehende multimediale Daten zu signalisieren, beispielsweise um Interesse an einem sofortigen und/oder vollständigen Download zu wecken. Dabei kann ein vom Absender als Signalisierungssignal gekennzeichneter multimedialer Bestandteil einer MM im Empfangsgerät das von einem Empfänger voreingestellte Signalisierungssignal ersetzen, wenn dieses von einem Empfänger zugelassen wird. Von Vorteil ist ein erfindungsgemäßes Verfahren insbesondere dann, wenn einem multimedialen Signalisierungssignal wenigstens im PULL-Modus eine Information über die Größe der für eine Übertragung bereitliegenden Daten beigefügt wird. In dieser vorteilhaften Weiterbildung der Erfindung wird ein gekennzeichnetes Element bzw. Signalisierungssignal an den empfangenden User Agent bevorzugt übertragen. Damit kann in einer bevorzugten Ausführungsform der Erfindung eine vorgegebene Information als Entscheidungshilfe dafür verwendet werden, ob die MM sofort, bevorzugt und/oder vollständig zum User Agent übertragen werden soll.

So kann dieses Verfahren in einem erfindungsgemäßen Kommunikationssystem generell unter Nutzung einer Rückmeldung an den Versender auch zum Versand von Daten oder Nachrichten mit informierendem oder werbendem Inhalt eingesetzt werden. Es bietet im Gegensatz zu bekannten Werbe- und Informationsmethoden den großen Vorteil, daß es nur elektronisch aufbereitet und nicht physikalisch oder körperlich hergestellt werden muß. Fertigungskosten und Lagerung sowie wesentliche Kosten der Verteilung entfallen somit. Dabei ist ein Vertrieb voll automatisierbar, und zudem kann auch eine Auswertung von verschiedenen zusätzlichen Formen der Resonanz der beteiligten direkt angesprochenen Verkehrskreise vorgenommen werden. Als Gradmesser für die Akzeptanz einer Werbemaßnahme können die Zahlen der teilweise oder vollständig durchgeführten Downloads ausgewertet werden. Aktuell kann die Wirkung einer Werbemaßnahme nur anhand von Bestellung, schlimmstenfalls anhand von Beschwerden oder Abbrüchen von Downloads gemessen werden.

Gemäß vorliegender Erfindung wird dem Absender einer MM die Möglichkeit gegeben, einen Bestandteil oder im Fall einer Präsentation auch mehrere multimediale Bestandteile einer MM als Signalisierungssignal zu kennzeichnen. Die Kennzeichnung eines multimedialen Bestandteiles oder mehrerer Bestandteile einer MM als Signalisierungssignal erfolgt unabhängig von Medientyp und Medienformat des multimedialen Bestandteils. Auch ein aus mehreren unterschiedlichen Komponenten zusammengesetztes Signalisierungssignal wird sofort nach der Zustellung der MM auf dem MMS User Agent des Empfängers abgespielt, um den Empfänger in einer Ausführungsform der Erfindung anstelle eines im Endgerät gespeicherten Klingeltons von dem Eintreffen einer neuen MM zu unterrichten. Form und Umfang eines Signalisierungssignals hängen nun erfindungsgemäß nicht mehr starr von in einem Empfangsgerät gespeicherten individuellen Einstellungen eines Empfängers ab. Dieses Verfahren ist erfindungsgemäß unabhängig von der Art der Zustellung, also im PUSH- wie im PULL-Modus durchführbar. Ferner sieht die vorliegende Erfindung keine Einschränkung auf Audioinhalte vor; vielmehr soll es möglich sein, eine vollständige multimediale Präsentation, sofern sie Bestandteil der MM ist, als Signalisierungssignal zu kennzeichnen. In der Praxis sind individuelle Ansagetexte, Melodien, Bilder, Videosequenzen oder Kombinationen aus alledem realisierbar. Insbesondere bei kommerziellen MMs kann eine schon aus der Werbung bekannte Melodie bzw. ein Jingle oder ein bereits bekanntes Logo des als Absender in Erscheinung tretenden Unternehmens einen zusätzlichen Werbe-Effekt hervorrufen. Auch können je nach Endgerät Vibrationen und/oder sonstige taktile Signale als Signalisierungssignal oder als ein Teil eines Signalisierungssignals genutzt werden.

Die vorliegende Erfindung wird nachfolgend unter Bezugnahme auf die beigefügte Zeichnung anhand bevorzugter Ausführungsbeispiele erläutert. In der Zeichnung zeigt:
- Fig. 1: eine schematische Gegenüberstellung der Prinzipien des PULL- und PUSH-Modus;
- Fig. 2: ein WAP MMS Transaction Flow Diagramm als schematische Abbildung von einer einer Datenübertragung zugeordneten Sendungen gemäß dem Wireless application protocoll bzw. WAP-Standard zwischen der Ebene des Versenders und der des Providers einerseits und der Ebene des Providers und der des Empfängers andererseits im PUSH-Modus;
- Fig. 3: ein WAP MMS Transaction Flow Diagramm analog der Darstellung von Fig. 2 zur Veranschaulichung einer Datenübertragung im PULL-Modus;
- Fig. 4: eine Codierung des neuen Header-Feld-Namens nach Variante a) gemäß vorliegender Erfindung;
- Fig. 5: eine Codierung des in der europäischen Patentanmeldung mit der Anmeldenummer EP 01 107 278.2 neu definierten Kopf-Feldes X-Mms-Content-ID nach der zweiten Ausführungsvariante dieser Erfindung, Variante b), und
- Fig. 6: eine Codierung der Parameter nach der europäischen Patentanmeldung, Anmeldenummer EP 01 107 278.2, und eines neu definierten Parameters Signaling-Element nach der zweiten Ausführungsvariante der Erfindung.

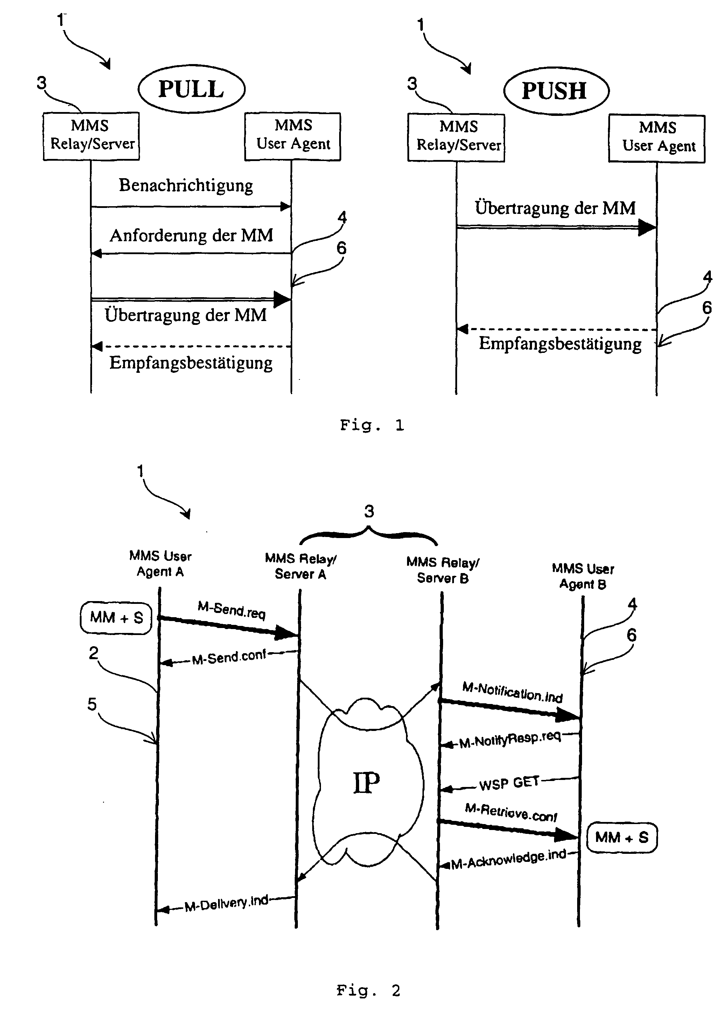

Elemente mit gleicher Funktion und Wirkungsweise sind in den Figuren 1 bis 6 durchgehend jeweils mit denselben Bezugszeichen versehen.

Fig. 1 zeigt eine schematische Gegenüberstellung der Prinzipien des PULL- und PUSH-Modus bei einer Zustellung einer MM in einem Kommunikationssystem 1. Das im folgenden zugrunde gelegte Kommunikationssystem 1 umfaßt mindestens drei Ebenen, nämlich eine Ebene 2 als Ebene eines Senders der Daten bzw. MM, eine Provider-Ebene 3 und eine Ebene 4 eines Empfängers, der die von einem Teilnehmer-Endgerät 5 abgesandte MM auf einem Teilnehmer-Endgerät 6 bzw. als MMS user agent bezeichnetes Telekommunikationsgerät aufbereitet erhält.

Zur Veranschaulichung der prinzipiellen Unterschiede zwischen dem PULL- und dem PUSH-Modus sind in der Darstellung von Fig. 1 nur eine Provider-Ebene 3 und die Ebene 4 eines Empfängers mit dem empfangenen Teilnehmer-Endgerät 6 MMS user agent gezeigt. In dem sogenannten PUSH-Modus wird demnach eine ankommende MM unverzüglich dem Empfänger zugestellt. Dagegen wird bei dem sogenannten PULL-Modus der Empfänger zunächst über eine neu eingetroffene MM informiert. Daraufhin kann der Empfänger selbst entscheiden, ob bzw. wann er diese MM auf sein Endgerät herunter lädt. Im PULL-Modus hat der Empfänger damit die Möglichkeit, sich durch Verschieben eines Downloads für eventuell eiligere oder sonstig wichtigere MMs erreichbar zu halten. Auch können Downloads großer Datenmengen so zur Kosteneinsparung und Verbesserung der Auslastung der Übertragungskanäle eines Providers in zeitliche Bereiche mit preiswerteren Tarifen verschoben werden. Für den Service des PULL-Modus sind jedoch als zusätzliche Signale eine Benachrichtigung des Empfängers und von diesem eine Aufforderung zur Übertragung der MM zu erzeugen und zu übertragen.

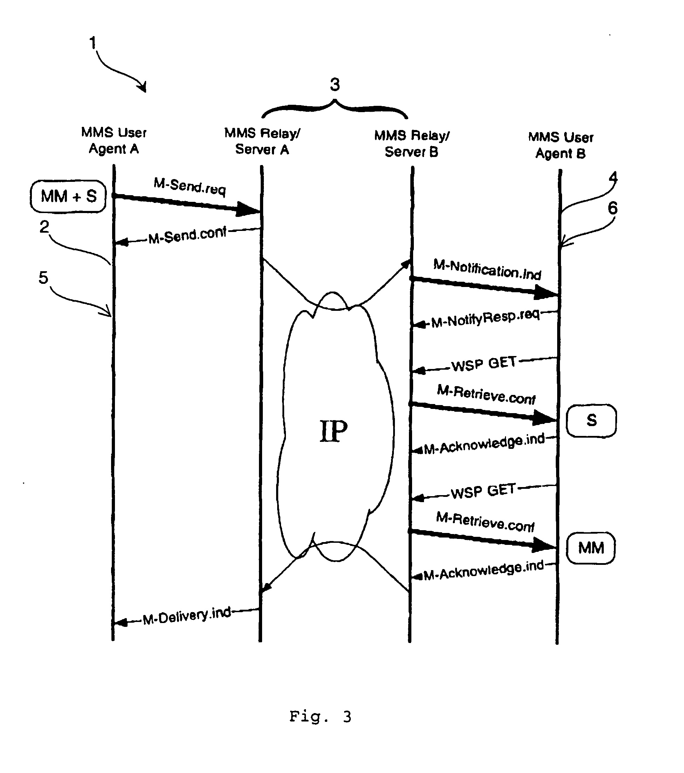

Fig. 2 stellt ein WAP MMS Transaction Flow Diagramm als schematische Abbildung von einer Datenübertragung mit zugeordneten Sendungen gemäß dem Wireless application protocoll bzw. WAP-Standard zwischen der Ebene des Versenders und der des Providers einerseits und der Ebene des Providers und der des Empfängers andererseits dar. Hierin sind nun die vorstehend schon zu der Abbildung von Fig. 1 genannten Ebenen vollständig dargestellt. Die Provider-Ebene 3 ist dabei in zwei Ebenen aufgespalten worden, um zwischen einem für den Versender A zuständigen MMS Relay/Server A und einem für den Empfänger B zuständigen MMS Relay/Server B unterscheiden zu können. Diese beiden MMS Relay/Server sind miteinander über ein IP Netz nach einem Internet-Protokoll verbunden, in dem zur reinen Übertragung der MM und der dargestellten Rückdaten lediglich eine Umcodierung vorgenommen wird, was für den Gegenstand der vorliegenden Erfindung nicht wesentlich von Belang ist.

In dem Ausführungsbeispiel von Fig. 2 ist die Anwendung der Erfindung auf ein Kommunikationssystem 1 für den WAP-Standard beschrieben, wie es u.a. in der Übertragung Daten in dem Universal mobile telecommunication standard UMTS, Verwendung finden wird. Es versteht sich, daß die Erfindung auch auf andere Standards übertragbar ist. Insbesondere sind hier auch gemischte Kommunikationssysteme gemeint, die neben Mobilfunkstrecken auch Festnetzverbindungen o.ä. umfassen.

Wie bereits eingangs beschrieben ist für zukünftige Verfahren z.B. im UMTS-Standard vorgesehen, zusätzlich zum bisherigen Short Message Service SMS einen sogenannten Multimedia Messaging Service MMS vorzusehen für die Übertragung von komplexer Nachrichten, den Multimedia messages MMs. Damit können auch formatierte Texte und Bilder mit und ohne Ton übertragen werden. Die im SMS vorhandene Beschränkung auf eine Nachrichtenlänge von 160 Zeichen entfällt. Eine Übertragung u.a. von mehrteiligen und/oder miteinander gekoppelten Audio- und Videonachrichten ist möglich. MMS ist über die Nutzung von WAP realisierbar.

Das Kommunikationssystem 1 umfaßt die Ebene 2 des Datenversenders, auch als MMS User Agent A bezeichnet. Weiter ist die Ebene 3 eines Providers vorgesehen, dessen Netzelement den Service ausführt und nachfolgend als MMS Relay/Server bezeichnet wird. Schließlich ist die Ebene 4 als die Ebene des Empfängers vorgesehen, der als MMS User Agent B bezeichnet ist. Selbstverständlich ist es möglich, daß in der Ebene 3 auch mehrere Provider auftreten. Das ist beispielsweise dadurch möglich, daß der Datenversender und der gewählte Empfänger unterschiedliche Provider nutzen. Zudem können diese unterschiedlichen Provider noch durch dritte Provider als Netzbetreiber miteinander verbunden sein.

Ein Austausch der WAP Messages ist zwischen vier beteiligten Instanzen, MMS User Agent A, MMS Relay/Server A, MMS Relay/Server B und MMS User Agent B, bei Versand bzw. Empfang einer MM dargestellt. Unter MMS User Agent versteht man eine Applikation auf einem Teilnehmer-Endgerät, das die MMS-Funktionalität realisiert. Ein MMS Relay/Server ist ein Netzelement bei einem MMS Service Provider, das den MMS User Agents die MMS-Funktionalität zur Verfügung stellt. Die Ebene 2 des Datenversenders umfaßt mindestens ein Teilnehmer-Endgerät oder Telekommunikationsgerät 5, ebenso umfaßt auch die Ebene 4 des Empfängers ein Teilnehmer-Endgerät oder Telekommunikationsgerät 6. Diese Telekommunikationsgeräte 5,6 können beispielsweise als übliche Handies oder als Geräte mit weiteren Eingabe- oder Anzeigefunktionen, wie etwa Laptops, ausgebildet sein.

Eine Voraussetzung für das Umsetzen der vorstehend beschriebenen Idee der Übermittlung eines durch einen Absender frei festlegbaren Signalisierungssignals S ist die Möglichkeit, die einzelnen multimedialen Bestandteile einer Nachricht mit multimedialem Inhalt, kurz MultiMedia Message MM, nach dem Editieren bzw. Zusammenstellen getrennt voneinander referenzieren und als Signalisierungssignal S kennzeichnen zu können. Diese Kennzeichnung soll zusammen mit der MM an den Empfänger geschickt werden. Das macht eine Modifikation der WAP Messages M-Send.req, M-Notification.ind und M-Retrieve.conf erforderlich. In der Abbildung von Fig. 2 sind die drei durch diese Erfindung betroffenen WAP Messages in dem sogenannten Transaction Flow Diagramm durch Pfeile mit fett gedrucktem Strich hervorgehoben. Es wird nun die Abfolge einzelner Signale in dem vorstehend beschriebenen Kommunikationssystem 1 erläutert, die zum Versenden einer MM von MMS User Agent A über den MMS Relay/Server A und MMS Relay/Server B hin zum MMS User Agent B im PUSH-Modus notwendig ist:

Eine in dem Telekommunikationsgerät 5 des Versenders verfaßte oder über dieses weiterzuleitende Multimedia message MM kann einen oder mehrere Elemente oder Datensätze enthalten, beispielsweise einzelne Bilder, Filmsequenzen, Texte oder ähnliches. Die MM wird zunächst als Anfrage-Sendung, die im WAP-Protokoll den Namen M-Send.req trägt, von der Ebene 2 an den Provider MMS Relay/Server A in der Ebene 3 versandt. Von dort wird die eingegangene Sendung mit einer Rücksendung M-send.conf an den Versender der Ebene 2 quittiert.

Über ein IP-Netzwerk wird die multimediale Nachricht MM von MMS Relay/Server A an MMS Relay/Server B versandt, wobei auch eine Umcodierung der Multimedia-Nachricht MM als ganze oder in Teilen erfolgen kann. Der MMS Service Provider des Empfängers B hat im allgemeinen Kenntnis darüber, welche Medientypen, z.B. Standbild, und Medienformate, z.B. JPEG, das MMS User Agent B des Empfängers B verarbeiten bzw. darstellen kann. Derartige Informationen werden während einer Anmeldung eines MMS User Agents B bei dem zuständigen MMS Service Provider ausgetauscht und in dessen Zuständigkeitsbereich, dem Multimedia Messaging Service Environment MMSE, gespeichert. Wenn ein MMS Service Provider eine MM erhält, bestehend aus einem Element von einem Medientyp oder Medienformat, den bzw. das der adressierte MMS User Agent B nicht zu verarbeiten und/oder wiedergeben in der Lage ist, kann eine Transcodierung bzw. Konvertierung eines Datei-Typs oder Datei-Formates vor der Auslieferung dieser MM im MMSE des MMS Service Providers des Empfängers B stattfinden. Nach dieser Erfindung geht die Kennzeichnung eines MM-Elementes als ein Signalisierungssignal S durch eine gegebenenfalls durchgeführte Transcodierung oder Konvertierung nicht verloren. Zeitlich darauffolgend wird von dem Provider MMS Relay/Server B eine Information M-Notification.ind als Benachrichtigung an den Empfänger MMS User Agent B in Ebene 4 gesandt, mit der dieser darüber informiert wird, daß für ihn eine multimediale Nachricht MM beim Provider MMS Relay/Server B zum Herunterladen bereitliegt. Der MMS User Agent B veranlaßt in dem in Fig. 2 dargestellten PUSH-Modus ohne Rückfrage bei oder Quittierung durch die Person des Empfängers den Download der MM.

Der Empfänger erhält die gesamte MM einschließlich des darin enthaltenen Signalisierungssignals S in der M-retrieve.conf zugestellt. Eine Nachricht M-Acknowledge.ind quittiert den Empfang der MM. Eine abschließende Nachricht M-Delivery.ind kann eine Empfangsbestätigung von der Ebene 3 an den Versender MMS User Agent A in Ebene 2 zurückgeben.

Im Gegensatz dazu sind in dem s.g. PULL-Modus nach Fig. 3 als Reaktion auf den Empfang einer M-Notification.ind die vorstehend diskutierten zwei Fälle zu unterscheiden:
1. In der Nachricht M-Notification.ind wird ein Speicherort des Signalisierungssignals S angezeigt. Bei der Zustellung des Signalisierungssignals S in der M-retrieve.conf wird auch ein Verweis auf den Speicherplatz der restlichen Daten der MM übertragen. Dabei ist der MMS-Relay/Server B beim Herunterladen der restlichen Daten der MM darüber informiert, daß die Elemente des Signalisierungssignals S bereits übertragen worden sind und keine erneute Übertragung notwendig ist.
2. In der M-Notification.ind sind nun bereits die Speicherorte des Signalisierungssignals S und der restlichen Daten der MM enthalten, so daß es keiner erneuten Versendung dieser Lageinformation im Rahmen der Übersendung des Signalisierungssignals S bedarf.

Ein Download des Signalisierungssignals S wird vorzugsweise ohne Interaktion mit der Person des Empfängers durchgeführt.

Erst auf Anforderung durch den Empfänger B mit einer Sendung WSP-GET wird von dem Provider MMS Relay/Server B die MM mit einer Sendung M-Retrieve.conf an den Empfänger MMS User Agent B weitergeleitet. Der Empfänger kann wiederum ein Signalisierungssignal S erhalten, das aber seit dem ersten Versand auch in der User-Agent B Applikation zur Entlastung des Übertragungskanals zwischengespeichert worden sein kann. Eine Nachricht M-Acknowledge.ind quittiert den Empfang der MM in der Ebene 4.,Eine abschließende Nachricht M-Delivery.ind gibt eine Empfangsbestätigung von der Ebene 3 an den Versender MMS User Agent A in Ebene 2 zurück.

Zur Verwaltung der vorstehend genannten Sendungen dienen sog. Kopf- oder Header-Felder, also der eigentlichen MM und/oder einzelnen Elementen der MM vorangestellte Felder, in denen Informationen über die Herkunft, Sendezeit, Dateiformat, Dateigröße und weitere Details enthalten sein können. Erfindungsgemäß ist die Anzahl der Kopf- oder Header-Felder erhöht oder die Anzahl der Einträge in einem Kopf-Feld verändert. Diese Änderungen dienen erfindungsgemäß zur Kennzeichnung mindestens eines Elements als Bestandteil eines Signalisierungssignals S. Durch das Signalisierungssignal S soll der Eingang der MM nach Vorgabe durch den Sender MMS User Agent A bei Eingang der M-Retrieve.conf unmittelbar angezeigt werden. Es ist damit im PULL-Modus möglich, daß das Signalisierungssignal S zweimal bei B auftritt. Durch diese Wiederholung des Signalisierungssignals S tritt ein Wiedererkennungseffekt auf, der zudem den fertig durchgeführten Download anzeigt. So muß ein Empfänger nicht während eines insbesondere sehr umfangreichen und damit länger andauernden Downloads auf das Ende und eine Abspielmöglichkeit warten.

Vorstehend werden zur Kennzeichnen eines multimedialen Bestandteiles als Signalisierungssignal S zwei prinzipielle Möglichkeiten vorgeschlagen. In der Ausführungsform a) wird ein neues Kopf-Feld mit der Bezeichnung X-Mms-Signaling-Element in den Kopfteil einer MM integriert. Nach Ausführungsform b) wird ein Kopf-Feld mit der Bezeichnung X-Mms-Content-ID um einen Parameter erweitert, mit dem ein MM-Element als Signalisierungssignal S gekennzeichnet wird. Diesem Paramter wird die Bezeichnung Signaling-Element zugewiesen.

In dem Ausführungsbeispiel, das auf den durch das WAP-Forum definierten binären Codierungen der im MMS ausgetauschten Messages basiert, wird die Möglichkeit einer Kennzeichnung in dem MM-Header nach beiden Varianten demonstriert. Erfindungsgemäße Änderungen werden durch Umrahmungen verdeutlicht dargestellt.

Dabei wird folgendes Szenario angenommen:
Benutzer A, Andreas Schmidt, schickt eine MM an Benutzer B, Markus Trauberg. Im MMS User Agent A wird die MM, die aus einem Text, einem JPEG-Bild und einer Melodie im MP3-Audio-Format besteht, von Benutzer A zusammengestellt. Benutzer A wünscht, daß die in der MM enthaltene Melodie als Signalisierungssignal S den Empfänger über das Eintreffen dieser MM anstelle eines im Empfangsgerät gespeicherten Klingelsignals informieren soll. Gemäß Darstellung von Fig. 2 werden die folgenden Messages mit Verweis auf das Signalisierungssignal S zwischen den Einheiten übertragen: M-Send.req, M-Notification.ind und M-Retrieve.conf. Beide vorstehend beschriebenen Varianten einer erfindungsgemäßen Kennzeichnung von Bestandteilen eines Signalisierungssignals S werden nun mit ihrem wesentlichen Inhalt für eine Übertragung im PUSH-Modus kurz wiedergegeben:

### 1. Abschicken einer MM

### Ausführungsvariante a:

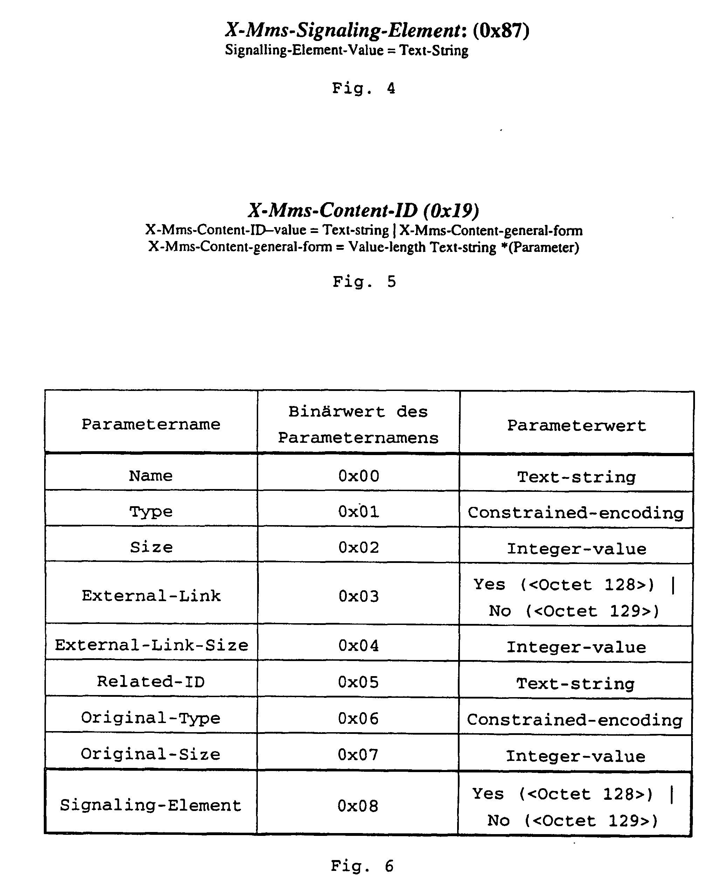

In der WAP Message M-Send.req, mit der die MM vom MMS User Agent A an den MMS Relay/Server A geschickt wird, kann in dem unter a) eingeführten Kopf-Feld X-Mms-Signaling-Element die Identifikationsnummer desjenigen Elementes eingetragen werden, das Benutzer A als Signalisierungssignal ausgewählt hat. Des weiteren beinhaltet diese WAP Message noch die in der Patentanmeldung EP 01 101 057.6, [3], definierten MM-Element-Identifikationsfelder. Die einzelnen Elemente sind im Header gemäß der Patentanmeldung mit der Anmeldenummer EP 01 107 278.2, [6], detailliert beschrieben. Das Kopf-Feld X-Mms-Signaling Element ist gemäß Abbildung von Fig. 4 zusätzlich in den Kopf-Bereich mit aufgenommen worden. Hier verweist das Kopf-Feld X-Mms-Signaling Element der obigen Vorgabe entsprechend auf die als Signalisierungssignal ausgewählte X-Mms-Content-ID <00714.1412.3>, in dem eine Audio-Datei nach dem MP3-Standard enthalten ist, wie es durch den Absender ausgewählt bzw. bestimmt wurde.

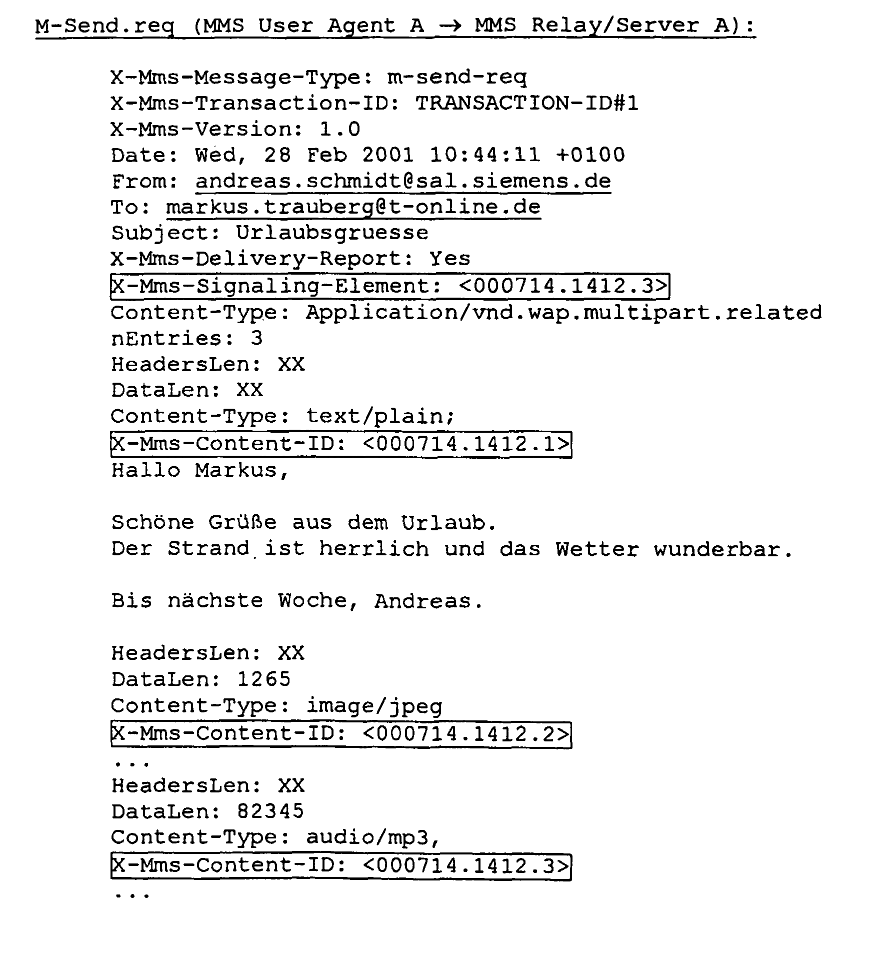

### Ausführungsvariante b:

Die WAP Message M-Send.req, mit der die MM vom MMS User Agent A an den MMS Relay/Server A geschickt wird, enthält die nach [6] erweiterten Kopf-Felder X-Mms-Content-ID. In jedem dieser Kopf-Felder befindet sich ein Satz von Parametern, der nach dieser Erfindung um einen weiteren Parameter mit der Bezeichnung Signaling-Element erweitert ist, vergleiche Variante b). Außerdem enthält die WAP Message M-Send.req ebenfalls die in [3] definierten MM-Element-Identifikationsfelder, damit jedes MM-Element gezielt angesprochen werden kann, siehe Abbildungen der Figuren 5 und 6.

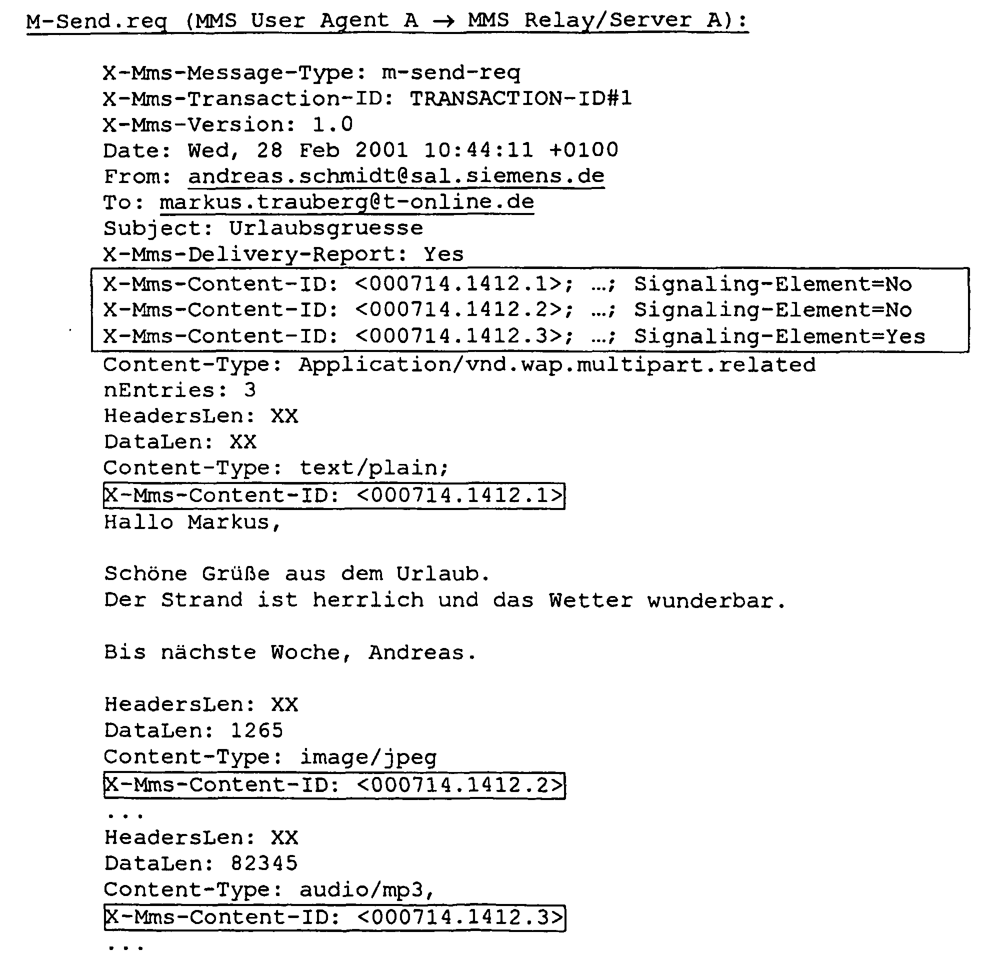

### 2. Nach dem Abschicken einer MM

Nach erfolgreicher Übertragung der MM vom MMS User Agent A an den MMS Relay/Server A wird die MM über ein IP-Netzwerk (IP - Internet Protocol) an den MMS Relay/Server B des Empfängers weitergeleitet. Hier wird in der Regel zunächst überprüft, ob das Endgerät des Empfängers alle in der MM enthaltenen Dateitypen und -formate darstellen bzw. wiedergeben kann. Falls nötig findet eine Transcodierung eines oder mehrerer MM-Elemente im Zuständigkeitsbereich des MMS Service Providers B statt. Anschließend wird eine Benachrichtigung über eine neu eingetroffene MM an das MMS User Agent B des Empfängers geschickt (PULL-Modus) oder die MM wird dem MMS User Agent B direkt zugestellt (PUSH-Modus).

3. Benachrichtigung über eine zum Download bereitliegende MM Mit dieser Erfindung ist es auch möglich, bereits mit der Benachrichtigung die Information an das MMS User Agent B zu übermitteln, daß die zum Download bereitliegende MM ein Element enthält, welches vom Absender als Signalisierungssignal gekennzeichnet worden ist. Das MMS User Agent B kann daraufhin den gezielten Download des als Signalisierungssignal gekennzeichneten MM-Elementes nach [3] einleiten, ohne die gesamte MM herunterladen zu müssen. In WAP wird das MMS User Agent B vom MMS Relay/Server B mit der WAP Message M-Notification.ind über eine zum Download bereitliegende MM informiert.

### Ausführungsvariante a

Die WAP Message M-Notification.ind enthält das nach Variante a) definierte Kopf-Feld X-Mms-Signaling-Element, das die Identifikationsnummer desjenigen Elementes enthält, das von Benutzer A als Signalisierungssignal ausgewählt worden ist.

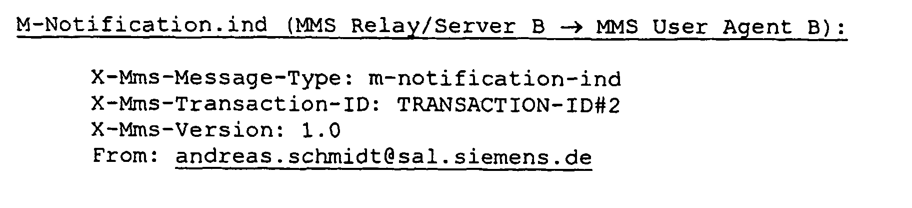

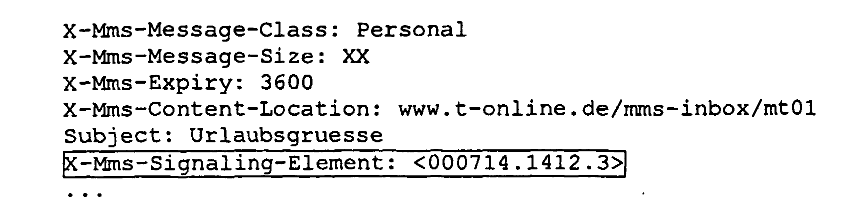

Im PULL-Modus kann die Zustellung des Signalisierungssignals S vor der Zustellung der restlichen Elemente der MM oder der kompletten MM erfolgen. Dabei wird in der M-retrieve.conf zusätzlich auch ein Link auf die Speicherort der restlichen multimedialen Nachricht MM im MMS-Relay/Server übertragen.

### Ausführungsvariante b:

Die WAP Message M-Notification.ind enthält die erweiterten Kopf-Felder X-Mms-Content-ID nach [3] mit dem in b) neu definierten Paramter Signaling-Element, der zur Kennzeichnung eines MM-Elementes als Signalisierungssignal benutzt werden kann.

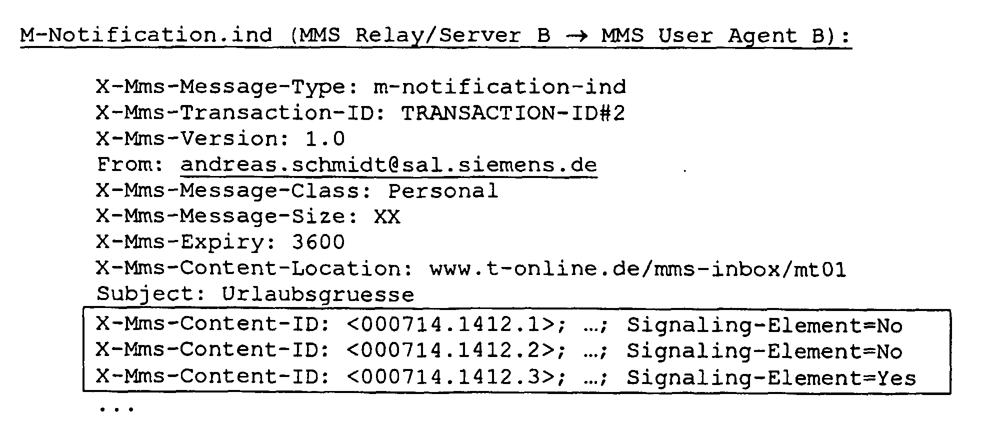

### 4. Zustellung der MM

Unabhängig vom gewählten Zustellmodus (PULL oder PUSH) wird die MM (oder nach [3] ein einzelnes Element einer MM) vom MMS Relay/Server B mit der WAP Message M-Retrieve.conf an den MMS User Agent B übertragen.

### Ausführungsvariante a:

In der WAP Message M-Retrieve.conf wird die Benutzung des in a) definierten Kopf-Feldes X-Mms-Signaling-Element in Kombination mit den in [3] definierten MM-Element-Identifikationsfeldern vorgeschlagen:

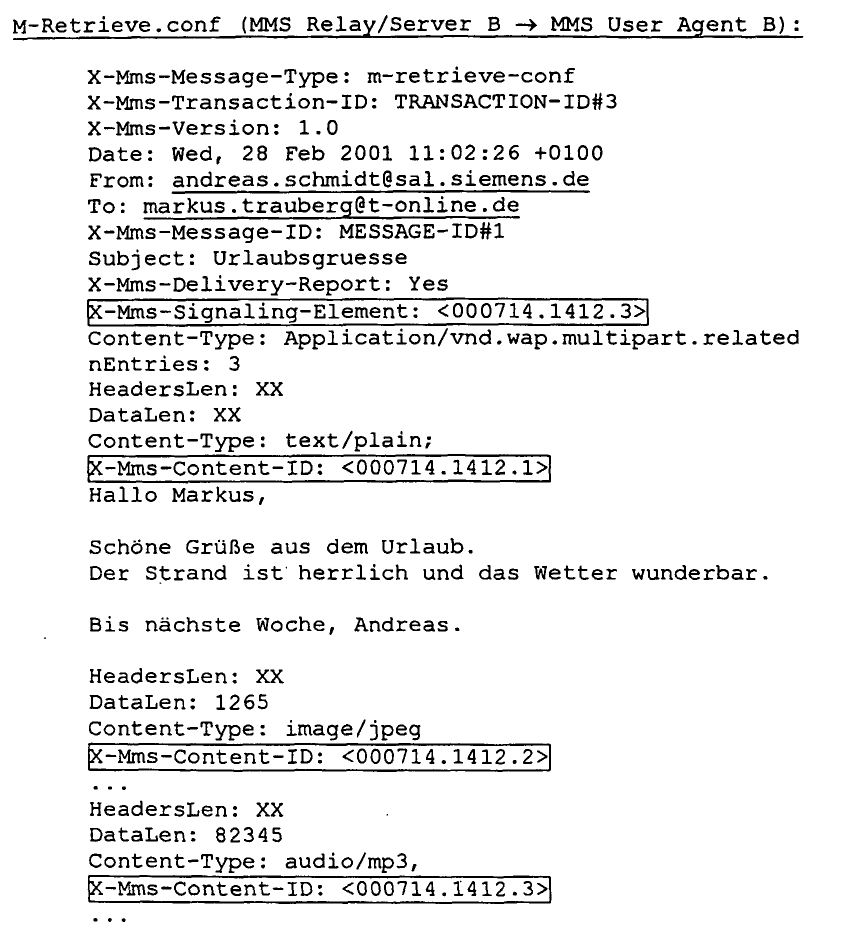

### Ausführungsvariante b)

In der WAP Message M-Retrieve.conf wird die Benutzung des um den neuen Eintrag Signaling-Element erweiterten Parametersatzes in jedem X-Mms-Content-ID Kopf-Feld in Kombination mit den in [3] definierten MM-Element-Identifikationsfeldern vorgeschlagen:

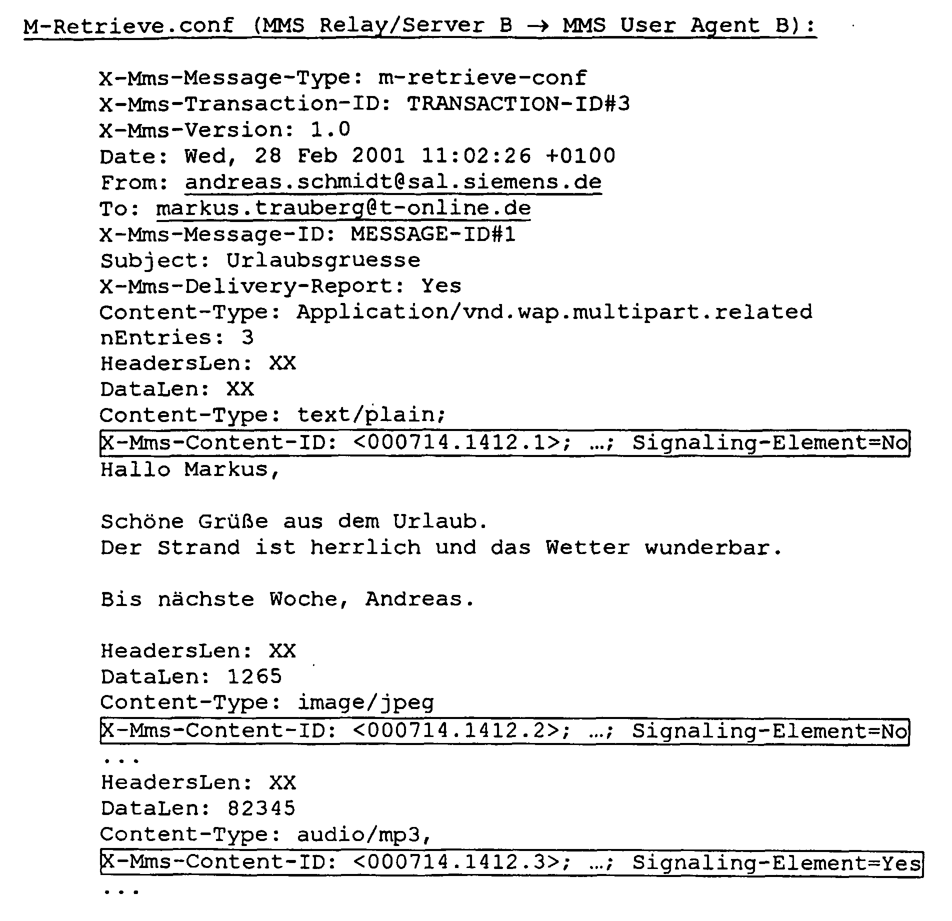

### 5. Nach der Zustellung einer MM

Unmittelbar nach der erfolgreichen Zustellung einer MM an das MMS User Agent B des Empfängers müssen die Kopf-Felder in der WAP Message M-Retrieve.conf daraufhin untersucht werden, ob ein MM-Element als Signalisierungssignal gekennzeichnet worden ist. Wenn dies der Fall ist, wird anstelle eines im Endgerät gespeicherten und vom Benutzer B voreingestellten Signalisierungssignals das entsprechend gekennzeichnete MM-Element wiedergegeben.

### Ausführungsvariante a:

In der WAP Message M-Retrieve.conf muß das Kopf-Felder mit der Bezeichnung X-Mms-Signaling-Element gesucht werden. Die Referenzierung eines MM-Elementes erfolgt über die in [3] definierten MM-Element-Identifikationsfelder.

### Ausführungsvariante b:

In der WAP Message M-Retrieve.conf müssen alle Kopf-Felder mit der Bezeichnung X-Mms-Content-ID gesucht und ausgewertet werden. Der Parameter-Wert des Parameters Signaling-Element zeigt dabei an, ob es sich bei dem entsprechenden MM-Element um ein Signalisierungssignal handelt oder nicht.

In diesem Beispiel hört Benutzer B bei beiden Ausführungsvarianten als Signalisierungssignal S die von Benutzer A ausgewählte mp3 Audio-Datei.

Die weiteren Messages einer MMS-Implementierung gemäß Abbildung von Fig. 2 und Fig. 3 bleiben von dieser Erfindung unberührt und werden hier nicht dargestellt.

Zusammenfassend sind vorstehend verschiedene Möglichkeiten zur Veranlassung einer unmittelbaren und automatischen Darstellung eines Elements beim Eingang einer MM durch einen Empfänger durch Kennzeichnung des betreffenden Elements als Signalisierungssignal zusammen mit einigen der jeweiligen Vorteile vorgestellt worden. Die Ausführungsvarianten a) und b) bauen auf der Patentanmeldung mit der Anmeldenummer EP 01 101 057.6, [3], auf. Variante a) wird sich einfacher in die vorhandene WAP Implementierung des MMS einfügen lassen als Variante b), die zusätzlich zu der Patentanmeldung mit der Anmeldenummer EP 01 101 057.6 auch noch auf der Patentanmeldung mit der Anmeldenummer EP 01 107 278.2, [6] basiert.

Hintergrundangaben zu WAP, MMS und vorgehenden Anmeldungen finden sich neben den vorstehend gegebenen Zitatstellen zusammengefaßt insbesondere an folgenden Stellen:
[1] GSM 03.40 version 7.4.0, Release 1998; Digital Cellular Telecommunications System; Technical realisation of the Short Message Service (SMS);
[2] 3GPP TS 22.140 version 4.1.0, Release 4, March 2001; Third Generation Partnership Project; Multimedia Messaging Service (MMS); Service Aspects; Stage 1; 3GPP TS 23.140 version 4.3.0, Release 4, June 2001; Third Generation Partnership Project; Technical Specification Group Terminals; Multimedia Messaging Service (MMS); Functional Description; Stage 2.
[3] Trauberg, M. et al.: Verfahren zur detailierten Benachrichtigung eines Empfängers einer Multimedia Message mit Informationen über die einzelnen Bestandteile der Message im Multimedia Messaging Service (MMS) der dritten Mobilfunkgeneration und zum gezielten Herunterladen einzelner Bestandteile einer Message.", Patentanmeldung mit der Anmeldenummer EP 01 101 057.6.
[4] WAP-209-MMS Encapsulation; Wireless Application Protocol; WAP Multimedia Messaging Service; Message Encapsulation; MMS Proposed version, June 2001.
[5] WAP-203-WSP, Version 4-May-2000; Wireless Application Protocol, Wireless Session Protocol Specification; Chapter 8.4: "Header Encoding".
[6] Trauberg, M. et al.: "Verfahren zur detaillierten Benachrichtigung eines Empfängers einer Multimedia Message im Multimedia Messaging Service (MMS)", Patentanmeldung mit der Anmeldenummer EP 01 107 278.2

Im Rahmen der vorstehend beschriebenen Ausführungsbeispiele wurde insbesondere auf folgende Abkürzungen, Akronyme und Definitionen Bezug genommen.
- GSM: Global System for Mobile Communication
- MM: Multimedianachricht (Multimedia Message)
- MMS: Multimedia Messaging Service
- SMS: Short Message Service
- UMTS: Universal Mobile Telecommunication System
- WAP: Wireless Application Protocol
- WSP: Wireless Session Protocol
- MMSE: Multimedia Messaging Service Environment

- 1: Kommunikationssystem
- 2: Ebene eines Senders der Daten
- 3: Ebene eines Providers
- 4: Ebene eines Empfängers
- 5: Teilnehmer-Endgerät / Telekommunikationsgerät
- 6: Teilnehmer-Endgerät / Telekommunikationsgerät
- A: Sender
- B: Empfänger
- S: Signalisierungssignal

| MMS spezifische Abkürzungen: | |
|---|---|
| MMS User Agent A | Sender-Applikation (Fig. 2) |
| MMS User Agent B | Empfänger-Applikation (Fig. 2) |
| M-Relay/Server | MMS Verbindungseinheit / Provider |
| M-Send.req | MMS Sendeanfrage |
| M-Send.conf | MMS Sendebestätigung |
| M-Notification.ind | MMS Empfängerbenachrichtigung |
| M-NotifyResp.req | MMS Empfängerbenachrichtigungsbestätigung |
| WSP GET | MMS Zustellanfrage |
| M-Retrieve.conf | MMS Zustellnachricht |
| M-Acknowledge.ind | MMS Zustellungsbestätigung |
| M-Delivery.ind | MMS Zustellstatusbenachrichtigung |
| IP | Netz nach einem Internet-Protokoll |

## Patentansprüche

1. Verfahren zur Übertragung einer Multimedia- Nachricht (MM) mit einem oder mehreren multimedialen Bestandteilen von einem Absender (5) an einen Empfänger (6) in einem Kommunikationssystem,
**dadurch gekennzeichnet,**
**dass** vom Absender (5) mindestens ein multimedialer Bestandteil der Multimedia-Nachricht (MM)zur Veranlassung einer unmittelbaren Darstellung dieses multimedialen Bestandteils vor oder beim Eintreffen der restlichen multimedialen Bestandteile und/oder einer vorgegebenen Teilmenge der multimedialen Bestandteile der Multimedia-Nachricht (MM) beim Empfänger (6) als Signalisierungssignal (S) **gekennzeichnet** wird,
**dass** dem Empfänger (6) mit Hilfe eines Benachrichtigungssignals (M-Notification.ind), das das Bereitliegen der Multimedia-Nachricht (MM) im Kommunikationssystem zum Herunterladen anzeigt, bereits die Information übermittelt wird, dass die zum Herunterladen bereitliegende Multimedia-Nachricht (MM) mindestens einen multimedialen Bestandteil enthält, welcher vom Absender (5) als Signalisierungssignal **gekennzeichnet** worden ist, und dass bei Auffinden dieses Benachrichtigungssignals (M-Notification.ind) durch den Empfänger (6), das anzeigt, dass ein multimedialer Bestandteil innerhalb der zum Herunterladen bereitliegenden Multimedia-Nachricht (MM) als Signalisierungssignal (S) **gekennzeichnet** ist, das sofortige und/oder bevorzugte Herunterladen dieses **gekennzeichneten** multimedialen Bestandteils eingeleitet wird, um den Empfänger (6) damit über die im Kommunikationssystem wartende Multimedia-Nachricht (MM) zu informieren.

2. Verfahren nach Anspruch 1,
**dadurch gekennzeichnet,**
**dass** das Signalisierungssignal (S) dem Empfänger (6) vor dem Eintreffen und/oder beim Eintreffen der restlichen multimedialen Bestandteile der Multimedia-Nachricht (MM) oder der kompletten Multimedia-Nachricht (MM) zugestellt und danach unmittelbar wiedergegeben wird.

3. Verfahren nach einem der vorhergehenden Ansprüche,
**dadurch gekennzeichnet,**
**dass** einem eingehenden Anruf und/oder eingehenden multimedialen Daten zunächst eine Multimedia - Nachricht (MM) mit einem multimedialen Signalisierungssignal (S) vorangestellt wird, um den eingehenden Anruf und/oder die eingehenden multimediale Daten zu signalisieren.

4. Verfahren nach einem der vorhergehenden Ansprüche,
**dadurch gekennzeichnet,**
**dass** vom Signalisierungssignal (S) optische, akustische und/oder taktile multimediale Bestandteile wiedergegeben werden oder eine vollständige multimediale Präsentation wiedergegeben wird.

5. Verfahren nach einem der vorhergehenden Ansprüche,
**dadurch gekennzeichnet,**
**dass** dem Signalisierungssignal (S) eine Information über die Größe der für eine Übertragung bereitliegenden Daten der zu übertragenden Multimedia-Nachricht (MM) beigefügt wird.

6. Verfahren nach einem der vorhergehenden Ansprüche,
**dadurch gekennzeichnet,**
**dass** das dem Empfängergerät (6) zugestellte Signalisierungssignal (S) vom Empfänger (6) als Entscheidungshilfe dafür verwendet wird, ob die multimedialen Bestandteile der Multimedia-Nachricht (MM) sofort, bevorzugt und/oder vollständig zum Empfänger (6) heruntergeladen werden.

7. Verfahren nach einem der vorhergehenden Ansprüche,
**dadurch gekennzeichnet,**
**dass** vom Absender (5) die Multimedia-Nachricht (MM) mit dem als Signalisierungssignal (S) **gekennzeichneten** multimedialen Bestandteil an einen für ihn zuständigen MMS Relay/Server (A) geschickt wird.

8. Verfahren nach Anspruch 7,
**dadurch gekennzeichnet,**
**dass** die Kennzeichnung des multimedialen Bestandteils in Daten codiert wird, die von einem sendenden MMS User Agent des Absenders (5) zu dem für ihn zuständigen MMS Relay/Server (A) zum Verschicken der multimedialen Nachricht (MM) gesendet werden.

9. Verfahren nach Anspruch 7 oder 8,
**dadurch gekennzeichnet,**
**dass** vom für den Absender (5) zuständigen MMS Relay/Server (A) die Multimedia-Nachricht (MM) mit dem als Signalisierungssignal (S) **gekennzeichneten** multimedialen Bestandteil an einen für den Empfänger (6) zuständigen MMS Relay/Server (B) weitergeleitet wird.

10. Verfahren nach Anspruch 9,
**dadurch gekennzeichnet,**
**dass** vom für den Empfänger (5) zuständigen MMS Relay/Server (B) das Benachrichtigungssignal (M-Notification.ind) an den Empfänger (6) gesandt wird, mit dem dieser darüber informiert wird, dass für ihn die Multimedia-Nachricht (MM) beim für ihn zuständigen MMS Relay/Server (B) zum Herunterladen bereitliegt, und dass die zum Herunterladen bereitliegende Multimedia-Nachricht (MM) mindestens einen multimedialen Bestandteil enthält, welcher vom Absender (5) als Signalisierungssignal (S) **gekennzeichnet** worden ist.

11. Verfahren nach Anspruch 10,
**dadurch gekennzeichnet,**
**dass** die Kennzeichnung des multimedialen Bestandteils in den Daten codiert wird, die von dem dem Empfänger (6) zugeordneten MMS Relay/Server (B) zu einem empfangenden MMS User Agent des Empfängers (6) zur Benachrichtigung des empfangenden User Agent über das Vorliegen der Multimedia-Nachricht (MM) gesendet werden.

12. Verfahren nach einem der vorhergehenden Ansprüche 10 oder 11,
**dadurch gekennzeichnet,**
**dass** die Kennzeichnung des multimedialen Bestandteils in den Daten codiert wird, die von dem dem Empfänger (6) zugeordneten Relay/Server (B) zu einem empfangenden MMS U-ser Agent des Empfängers (6) zur Zustellung der Multimedia-Nachricht gesendet werden.

13. Verfahren nach einem der vorhergehenden Ansprüche,
**dadurch gekennzeichnet,**
**dass** in dem Benachrichtigungssignal (M-Notification.ind) ein Speicherort des Signalisierungssignals (S) dem Empfänger (6) angezeigt wird.

14. Verfahren nach Ansprüche 13,
**dadurch gekennzeichnet,**
**dass** bei der Zustellung des Signalisierungssignals (S) in dem Zustellungssignal (M-Retrieve.conf) auch ein Verweis auf den Speicherplatz der restlichen multimedialen Bestandteile der bereitliegenden Multimedianachricht (MM) an den Empfänger (6) übertragen wird.

15. Verfahren nach Anspruch 1 bis 12,
**dadurch gekennzeichnet,**
**dass** in dem Benachrichtigungssignal (M-Notification.ind) bereits die Speicherorte des Signalisierungssignals und der restlichen multimedialen Bestandteile der bereitliegenden Multimedia-Nachricht (MM) an den Empfänger (6) übertragen werden.

16. Verfahren nach einem der vorhergehenden Ansprüche,
**dadurch gekennzeichnet,**
**dass** das Herunterladen des Signalisierungssignals (S) ohne Interaktion mit der Person des Empfängers (6) durchgeführt wird.

17. Verfahren nach einem der vorhergehenden Ansprüche,
**dadurch gekennzeichnet,**
**dass** zur Kennzeichnung des multimedialen Bestandteils als Signalisierungssignal (S) ein zusätzliches Kopf-Feld in den Kopfteil der zu übertragenden Multimedia-Nachricht (MM) integriert wird.

18. Verfahren nach Anspruch 17 ,
**dadurch gekennzeichnet,**
**dass** die Codierung des Kopf-Feldes als Codierung des Feld-Namens und/oder des Feld-Wertes durchgeführt wird.

19. Verfahren nach einem der Ansprüche 17 oder 18,
**dadurch gekennzeichnet,**
**dass** das zusätzliche Kopf-Feld in den WAP Messages M-Send.req, M-Notification.ind und/oder M-Retrieve.conf des Kommunikationssystems mit der Bezeichnung X-Mms-Signaling-Element eingefügt wird.

20. Verfahren nach Anspruch 19,
**dadurch gekennzeichnet,**
**dass** das Kopf-Feld X-Mms-Signaling-Element als 0x87 und/oder der Wert des Kopf-Feldes X-Mms-Signaling-Element als Text-String codiert wird.

21. Verfahren nach einem der vorhergehenden Ansprüche,
**dadurch gekennzeichnet,**
**dass** ein Parametersatz in dem Kopf-Feld der WAP-Messages M-Send.req, M-Notification.ind und/oder M-Retrieve.conf des Kommunikationssystems mit der Bezeichnung X-Mms-Content-ID um einen zusätzlichen Parameter mit der Bezeichnung Signaling-Element erweitert wird, durch den mindestens ein multimedialer Bestandteil der zu übertragenden Multimedia-Nachricht (MM) als Signalisierungssignal (S) **gekennzeichnet** wird.

22. Verfahren nach Anspruch 21 ,
**dadurch gekennzeichnet,**
**dass** das Kopf-Feld in WAP wie folgt codiert wird: Codierung des Feld-Namens X-Mms-Content_ID als 0x19 und/oder
Codierung des Feld-Wertes von X-Mms-Content_ID als Text-String mit Bezeichnung mindestens eines multimedialen Bestandsteils der zu übertragenden Multimedia-Nachricht (MM).

23. Verfahren nach einem der Ansprüche 17 mit 22,
**dadurch gekennzeichnet,**
**dass** vom MMS Service Provider (B) des Empfängers (6) die Kopf-Felder der zu übertragenden Multimedia-Nachricht (MM) ausgewertet werden, um herauszufinden, ob die jeweils vorliegende Multimedia-Nachricht (MM) einen multimedialen Bestandteil enthält, der als Signalisierungssignal (S) **gekennzeichnet** worden ist.

24. Verfahren nach einem der vorhergehenden Ansprüche,
**dadurch gekennzeichnet,**
**dass** eine Transcodierung und/oder Konvertierung des **gekennzeichneten** multimedialen Bestandteils der jeweilig zu übertragenden Multimedia-Nachricht (MM) zur Anpassung an ein Empfangsgerät eingeleitet wird.

25. Verfahren nach einem der Ansprüche 1 bis 23,
**dadurch gekennzeichnet,**
**dass** ein multimedialer Bestandteil als Signalisierungssignal (S) in der jeweilig zu übertragenden Multimedia-Nachricht (MM) als resistent gegen eine eventuell ausgeführte Transcodierung und/oder Konvertierung von Medientyp und/oder Medienformat **gekennzeichnet** wird.

26. Verfahren nach einem der vorhergehenden Ansprüche,
**dadurch gekennzeichnet,**
**dass** ein vom Absender (5) als Signalisierungssignal (S) **gekennzeichneter** multimedialer Bestandteil der jeweils zu übertragenden Multimedia-Nachricht (MM) ein vom Empfänger (6) voreingestellte Signalisierungssignal ersetzt.

27. Verfahren nach dem vorhergehenden Anspruch,
**dadurch gekennzeichnet,**
**dass** das Signalisierungssignal (S) von einem empfangenden MMS User Agent B des Empfängers (6), einem sender- und/oder empfangsseitigen MMS-Relay/Server (A,B) aus der jeweilig zu übertragenden Multimedia-Nachricht (MM) extrahiert und/oder aufbereitet wird.

28. Verfahren nach einem der vorhergehenden Ansprüche,
**dadurch gekennzeichnet**,
das das Signalisierungssignal (S) Rückgriffe auf multimediale Bestandteile macht, die entweder beim Empfänger (6) fest vorinstalliert oder durch eine vorhergehende Übertragung bereits vorhanden bzw. gespeichert sind, so dass nur Abwandlungen und/oder Änderungen dieser multimedialen Bestandteile übertragen werden.

29. Verfahren nach einem der vorhergehenden Ansprüche,
**dadurch gekennzeichnet,**
**dass** als Absender (5) und/oder Empfänger (6) ein Teilnehmer-Endgerät, insbesondere ein mobiles Teilnehmer-Endgerät, bevorzugt ein WAP-fähiges Mobiltelefon, vorgesehen ist.

30. Teilnehmer-Endgerät zur Übertragung von Multimedia-Nachricht (MM) nach einem der vorhergehenden Ansprüche.

31. Teilnehmer-Endgerät nach Anspruch 30,
**dadurch gekennzeichnet,**
**dass** es als Mobiltelefon ausgebildet ist, insbesondere nach dem UMTS-Standard.

32. Kommunikationssystem
**dadurch gekennzeichnet,**
**dass** mindestens eine Komponente des Kommunikationssystems nach einem Verfahren der Ansprüche 1 mit 29 arbeitet und/oder ein Teilnehmer-Endgerät nach einem der Ansprüche 30 mit 31 umfasst.

## Claims

1. Method for transmitting a multimedia message (MM) with one or more multimedia components from a sender (5) to a recipient (6) in a communication system,
**characterised in that**
at least one multimedia component of the multimedia message (MM) to initiate immediate display of this multimedia component before or on arrival of the remaining multimedia components and/or a predefined subset of the multimedia components of the multimedia message (MM) is identified by the sender (5) at the recipient (6) end as a signalling signal (S), that the information is passed to the recipient (6) with the aid of a notification signal (M-Notification.ind) which shows that the multimedia message (MM) is ready in the communication system for downloading, that the multimedia message (MM) ready for downloading contains at least one multimedia component which has been identified by the sender (5) as a signalling signal, and that when this notification signal (M-Notification.ind) is found by the recipient (6), showing that a multimedia component is identified within the multimedia message (MM) ready for downloading as a signalling signal (S), the immediate and/or preferred downloading of this identified multimedia component is initiated, in order thereby to notify the recipient (6) about the multimedia message (MM) waiting in the communication system.

2. Method according to Claim 1,
**characterised in that**
the signalling signal (S) is delivered to the recipient (6) before and/or on arrival of the remaining multimedia components of the multimedia message (MM) or of the complete multimedia message (MM) and thereafter is immediately played back.

3. Method according to one of the preceding claims,
**characterised in that**
a multimedia message (MM) with a multimedia signalling signal (S) is first inserted before an incoming call and/or incoming multimedia data in order to signal the incoming call and/or the incoming multimedia data.

4. Method according to one of the preceding claims,
**characterised in that**
optical, acoustic and/or tactile multimedia components are played back by the signalling system (S) or a complete multimedia presentation is played back.

5. Method according to one of the preceding claims,
**characterised in that**
information about the size of the data, awaiting transmission, for the multimedia message (MM) to be transmitted is added to the signalling signal (S).

6. Method according to one of the preceding claims,
**characterised in that**
the signalling signal (S) delivered to the receiving device (6) is used by the recipient (6) as an aid in deciding whether the multimedia components of the multimedia message (MM) are downloaded immediately, by preference and/or completely to the recipient (6).

7. Method according to one of the preceding claims,
**characterised in that**
the multimedia message (MM) with the multimedia component identified as a signalling signal (S) is sent by the sender (5) to an MMS Relay/Server (A) responsible for him.

8. Method according to Claim 7,
**characterised in that**
identification of the multimedia component is coded in data that is sent from a sending MMS User Agent of the sender (5) to the MMS Relay/Server (A) responsible for him in order to send the multimedia message (MM).

9. Method according to Claim 7 or 8,
**characterised in that**
the multimedia message (MM) with the multimedia component identified as a signalling signal (S) is passed by the MMS Relay/Server (A) responsible for the sender (5) to an MMS Relay/Server (B) responsible for the recipient (6).

10. Method according to Claim 9,
**characterised in that**
the notification signal (M-Notification.ind) is sent by the MMS Relay/Server (B) responsible for the recipient (5) to the recipient (6), with which the latter is informed that the multimedia message (MM) is ready for him to download in the MMS Relay/Server (B) responsible for him, and that the multimedia message (MM) ready for downloading contains at least one multimedia component which has been identified by the sender (5) as a signalling signal (S).

11. Method according to Claim 10,
**characterised in that**
the identification of the multimedia component is coded in the data that is sent from the MMS Relay/Server (B) assigned to the recipient (6) to a receiving MMS User Agent of the recipient (6) in order to notify the receiving User Agent of the presence of the multimedia message (MM).

12. Method according to one of the preceding Claims 10 or 11,
**characterised in that**
the identification of the multimedia component is coded in the data that is sent from the Relay/Server (B) assigned to the recipient (6) to a receiving MMS User Agent of the recipient (6) in order to deliver the multimedia message.

13. Method according to one of the preceding claims,
**characterised in that**
a storage location of the signalling signal (S) is displayed to the recipient (6) in the notification signal (M-Notification.ind).

14. Method according to Claim 13,
**characterised in that**
a reference to the storage location of the remaining multimedia components of the waiting multimedia message (MM) is also transmitted to the recipient (6) in the delivery signal (M-Retrieve.conf) when the signalling signal (S) is delivered.

15. Method according to Claim 1 to 12,
**characterised in that**
the storage locations of the signalling signal and of the remaining multimedia components of the waiting multimedia message (MM) are transmitted to the recipient (6) in the notification signal (M-Notification.ind).

16. Method according to one of the preceding claims,
**characterised in that**
the download of the signalling signal (S) takes place without interaction with the person of the recipient (6).

17. Method according to one of the preceding claims,
**characterised in that**
an additional header field is integrated into the header of the multimedia message (MM) to be transmitted in order to identify the multimedia component as a signalling signal (S).

18. Method according to Claim 17,
**characterised in that**
the coding of the header field is carried out as coding of the field name and/or of the field value.

19. Method according to one of Claims 17 or 18,
**characterised in that**
the additional header field is inserted into the WAP messages M-Send.req, M-Notification.ind and/or M-Retrieve.conf of the communication system with the designation X-Mms-Signaling-Element.

20. Method according to Claim 19,
**characterised in that**
the header field X-Mms-Signaling-Element is coded as 0x87 and/or the value of the header field X-Mms-Signaling-Element is coded as a text string.

21. Method according to one of the preceding claims,
**characterised in that**
a parameter set in the header field of the WAP messages M-Send.req, M-Notification.ind and/or M-Retrieve.conf of the communication system with the designation X-Mms-Content-ID is extended to include an additional parameter with the designation Signaling-Element, by means of which at least one multimedia component of the multimedia message (MM) to be transmitted is identified as a signalling signal (S).

22. Method according to Claim 21,
**characterised in that**
the header field in WAP is coded as follows:
coding of the field name X-Mms-Content_ID as 0x19
and/or
coding of the field value of X-Mms-Content_ID as a text string with designation of at least one multimedia component of the multimedia message (MM) to be transmitted.

23. Method according to one of Claims 17 with 22,
**characterised in that**
the header field of the multimedia message (MM) to be transmitted is evaluated by the MMS service provider (B) of the recipient (6) in order to find out whether the respective multimedia message (MM) present contains a multimedia component which has been identified as a signalling signal (S).

24. Method according to one of the preceding claims,
**characterised in that**
transcoding and/or conversion of the identified multimedia component of the respective multimedia message (MM) to be transmitted is initiated, for adaptation to a receiving device.

25. Method according to one of Claims 1 to 23,
**characterised in that**
a multimedia component is identified as a signalling signal (S) in the respective multimedia message (MM) to be transmitted as being resistant to any transcoding and/or conversion of medium type and/or medium format.

26. Method according to one of the preceding claims,
**characterised in that**
a multimedia component of the respective multimedia message (MM) to be transmitted identified by the sender (5) as a signalling signal (S) replaces a signalling signal preset by the recipient (6).

27. Method according to the preceding claim,
**characterised in that**
the signalling signal (S) is extracted and/or prepared from the respective multimedia message (MM) to be transmitted by a receiving MMS User Agent B of the recipient (6), a sender-side and/or receive-side MMS Relay/Server (A,B).

28. Method according to one of the preceding claims,
**characterised in that**
the signalling signal (S) accesses multimedia components which are either permanently preinstalled in the equipment of the recipient (6) or are already available or stored as a result of a previous transmission so that only modifications and/or changes to these multimedia components are transmitted.

29. Method according to one of the preceding claims,
**characterised in that**
a subscriber terminal, in particular a mobile subscriber terminal, preferably a WAP-capable mobile telephone, is provided as sender (5) and/or recipient (6).

30. Subscriber terminal for transmitting a multimedia message (MM) according to one of the preceding claims.

31. Subscriber terminal according to Claim 30,
**characterised in that**
it is configured as a mobile telephone, in particular according to the UMTS standard.

32. Communication system,
**characterised in that**
at least one component of the communication system operates according to a method as set out in Claims 1 with 29 and/or comprises a subscriber terminal according to one of Claims 30 with 31.

## Revendications

1. Procédé pour la transmission d'un message multimédia (MM) avec un ou plusieurs composants multimédia d'un expéditeur (5) à un destinataire (6) dans un système de communication,
**caractérisé en ce que**
l'expéditeur (5) **caractérise** au moins un composant multimédia du message multimédia (MM) pour donner lieu à une représentation directe de ce composant multimédia avant ou lors de l'arrivée des composants multimédia restants et/ou d'une partie prédéfinie de l'ensemble des composants multimédia du message multimédia (MM) chez le destinataire (6) comme signal de signalisation (S),
**en ce que** l'information est transmise déjà au destinataire (6) à l'aide d'un signal de notification (M-Notification.ind), qui affiche la disponibilité du message multimédia (MM) dans le système de télécommunication pour le téléchargement, **en ce que** le message multimédia (MM) prêt pour le téléchargement contient au moins un composant multimédia, qui a été **caractérisé par** l'expéditeur (5) comme signal de signalisation, et en ce que, en cas de détection de ce signal de notification (M-Notification.ind) par le destinataire (6), qui indique qu'un composant multimédia à l'intérieur du message multimédia (MM) prêt pour le téléchargement est **caractérisé** comme signal de signalisation (S), le chargement immédiat et/ou préféré de ce composant multimédia **caractérisé** est déclenché afin d'informer le destinataire (6) de cette façon du message multimédia (MM) attendant dans le système de communication.

2. Procédé selon la revendication 1,
**caractérisé en ce que**
le signal de signalisation (S) est envoyé au destinataire (6) avant l'arrivée et/ou lors de l'arrivée des composants multimédia restants du message multimédia (MM) ou du message multimédia (MM) complet et est restitué ensuite immédiatement.

3. Procédé selon l'une quelconque des revendications précédentes,
**caractérisé en ce que**
en premier lieu, un message multimédia (MM) avec un signal de signalisation (S) multimédia précède un appel entrant et/ou des données multimédia entrant, afin de signaler l'appel entrant et/ou les données multimédia entrant.

4. Procédé selon l'une quelconque des revendications précédentes,
**caractérisé en ce que**
des composants multimédia optiques, acoustiques et/ou tactiles sont restitués par le signal de signalisation (S) ou bien une présentation multimédia complète est restituée.

5. Procédé selon l'une quelconque des revendications précédentes,
**caractérisé en ce que**
une information sur la grandeur des données prêtes pour une transmission du message multimédia (MM) à transmettre est jointe au signal de signalisation (S).

6. Procédé selon l'une quelconque des revendications précédentes,
**caractérisé en ce que**
le signal de signalisation (S) envoyé à l'appareil destinataire (6) est utilisé par le destinataire (6) comme aide à décider si les composants multimédia du message multimédia (MM) sont téléchargés immédiatement, de préférence et/ou complètement pour le destinataire (6).

7. Procédé selon l'une quelconque des revendications précédentes,
**caractérisé en ce que**
l'expéditeur (5) envoie le message multimédia (MM) avec le composant multimédia **caractérisé** comme signal de signalisation (S) à un MMS Relay/Server (A) compétent pour lui.

8. Procédé selon la revendication 7,
**caractérisé en ce que**
la caractérisation du composant multimédia est codée en données qui sont envoyées par un MMS User Agent émetteur de l'expéditeur (5) au MMS Relay/Server (A) compétent pour lui pour l'envoi du message multimédia (MM).

9. Procédé selon la revendication 7 ou 8,
**caractérisé en ce que**
le MMS Relay/Server (A) compétent pour l'expéditeur (5) transmet le message multimédia (MM) avec le composant multimédia **caractérisé** comme signal de signalisation (S) à un MMS Relay/Server (B) compétent pour le destinataire (6).

10. Procédé selon la revendication 9,
**caractérisé en ce que**
le MMS Relay/Server (B) compétent pour le destinataire (5) envoie le signal de notification (M-Notification.ind) au destinataire (6), avec lequel celui-ci est informé que le message multimédia (MM) est disponible pour lui chez le MMS Relay/Server (B) compétent pour lui pour le téléchargement, et **en ce que** le message multimédia (MM) prêt pour le téléchargement contient au moins un composant multimédia qui est **caractérisé par** l'expéditeur (5) comme signal de signalisation (S).

11. Procédé selon la revendication 12,
**caractérisé en ce que**
la caractérisation du composant multimédia est codé dans les données qui sont envoyées par le MMS Relay/Server (B) attribué au destinataire (6) à un MMS User Agent destinataire du destinataire (6) pour l'information du User Agent destinataire concernant la présence du message multimédia (MM).

12. Procédé selon l'une quelconque des revendications 10 ou 11 précédentes,
**caractérisé en ce que**
la caractérisation du composant multimédia est codée dans les données qui sont envoyées par le Relay/Server (B) attribué au destinataire (6) à un MMS User Agent destinataire du destinataire (6) pour l'envoi du message multimédia.

13. Procédé selon l'une quelconque des revendications précédentes,
**caractérisé en ce que**
un emplacement de stockage du signal de signalisation (S) est affiché dans le signal de notification (M-Notification.ind) pour le destinataire (6).

14. Procédé selon la revendication 13,
**caractérisé en ce que**
lors de l'envoi du signal de signalisation (S) dans le signal d'envoi (M-Retrieve.conf), on transmet également un renvoi à l'emplacement de stockage des composants multimédia restants du message multimédia (MM) prêt au destinataire (6).

15. Procédé selon les revendications 1 à 12,
**caractérisé en ce que**
dans le signal de notification (M-Notification.ind), les emplacements de stockage du signal de signalisation et des composants multimédia restants du message multimédia (MM) prêt sont déjà envoyés au destinataire (6).

16. Procédé selon l'une quelconque des revendications précédentes,
**caractérisé en ce que**
le téléchargement du signal de signalisation (S) est effectué sans interaction avec la personne du destinataire (6).

17. Procédé selon l'une quelconque des revendications précédentes,
**caractérisé en ce que**
pour la caractérisation du composant multimédia comme signal de signalisation (S), un champ d'en-tête supplémentaire est intégré dans la partie d'en-tête du message multimédia (MM) à transmettre.

18. Procédé selon la revendication 17,
**caractérisé en ce que**
le codage du champ d'en-tête est effectué comme codage du nom du champ et/ou de la valeur du champ.

19. Procédé selon l'une quelconque des revendications 17 ou 18,
**caractérisé en ce que**
le champ d'en-tête supplémentaire est inséré dans les WAP Messages M-Send.req, M-Notification.ind et/ou M-Retrieve.conf du système de communication portant l'appellation X-Mms-Signaling-Element.

20. Procédé selon la revendication 19,
**caractérisé en ce que**
le champ d'en-tête X-Mms-Signaling-Element est codé sous la forme OX87 et/ou la valeur du champ d'en-tête X-Mms-Signaling-Element codé sous la forme de text-string.

21. Procédé selon l'une quelconque des revendications précédentes,
**caractérisé en ce que**
un ensemble de paramètres dans le champ d'en-tête des WAP-Messages M-Send.req, M-Notification.ind et/ou M-Retrieve.conf du système de communication avec l'appellation X-Mms-Content_ID est complété avec un paramètre supplémentaire portant l'appellation Signaling-Element, par lequel au moins un composant multimédia du message multimédia (MM) à transmettre est **caractérisé** comme signal de signalisation (S).

22. Procédé selon la revendication 21,
**caractérisé en ce que**
le champ d'en-tête est codé en WAP de la façon suivante :
codage du nom de champ X-Mms-Content_ID sous la forme OX19
et/ou
codage de la valeur du champ de X-Mms-Content_ID sous la forme de text-string avec l'appellation d'au moins un composant multimédia du message multimédia (MM) à transmettre.

23. Procédé selon l'une quelconque des revendications 17 à 22,
**caractérisé en ce que**
le MMS Service Provider (B) du destinataire (6) analyse les champs d'entête du message multimédia (MM) à transmettre pour trouver si le message multimédia (MM) présent respectivement contient un composant multimédia qui a été **caractérisé** comme signal de signalisation (S).

24. Procédé selon l'une quelconque des revendications précédentes,
**caractérisé en ce que**
un transcodage et/ou une conversion du composant multimédia **caractérisé** du message multimédia (MM) respectif à transmettre est mis en oeuvre pour l'adaptation à un appareil de réception.

25. Procédé selon l'une quelconque des revendications 1 à 23,
**caractérisé en ce que**
un composant multimédia est **caractérisé** comme signal de signalisation (S) dans le message multimédia (MM) respectif à transmettre comme résistant vis-à-vis d'un transcodage et/ou d'une conversion du type de média et/ou du format de média éventuellement réalisé(e).

26. Procédé selon l'une quelconque des revendications précédentes,
**caractérisé en ce que**
un composant multimédia **caractérisé par** l'expéditeur (5) comme signal de signalisation (S) du message multimédia (MM) respectif à transmettre remplace un signal de signalisation préréglé par le destinataire (6).

27. Procédé selon la revendication précédente,
**caractérisé en ce que**
le signal de signalisation (S) est extrait et/ou mis en forme par un MMS User Agent B destinataire du destinataire (6), un MMS-Relay/Server (A, B) côté émetteur et/ou côté réception du message multimédia (MM) respectif à transmettre.

28. Procédé selon l'une quelconque des revendications précédentes,
**caractérisé en ce que**
le signal de signalisation (S) effectue des recours à des composants multimédia, qui sont préinstallés de façon fixe chez le destinataire (6) ou bien existent déjà ou sont stockés du fait d'une transmission antérieure, de sorte que seules des transformations et/ou des modifications de ces composants multimédia sont transmises.

29. Procédé selon l'une quelconque des revendications précédentes,
**caractérisé en ce que**
il est prévu comme expéditeur (5) et/ou destinataire (6) un terminal d'abonné, en particulier un terminal d'abonné mobile, de préférence un téléphone mobile compatible WAP.

30. Terminal d'abonné pour la transmission de message multimédia (MM) selon l'une quelconque des revendications précédentes.

31. Terminal d'abonné selon la revendication 30,
**caractérisé en ce que**
il est conçu comme téléphone mobile, en particulier selon le standard UMTS.

32. Système de communication,
**caractérisé en ce que**
au moins un composant du système de communication travaille selon un procédé des revendications 1 à 30 et/ou comprend un terminal d'abonné selon l'une quelconque des revendications 30 à 31.
